# EUROPEAN PATENT SPECIFICATION

(11) **EP 3 923 103 B1**
(45) Date of publication and mention of the grant of the patent: **08.10.2025**
(21) Application number: 20815583.8
(22) Date of filing: 17.02.2020
(51) Int. Cl.: G05B 23/02, G07C 5/00, G07C 5/08

(54) **ON-BOARD DIAGNOSTICS DEVICE AND SYSTEM, AND DETECTION METHOD AND READABLE STORAGE MEDIUM**
BORDEIGENES DIAGNOSEGERÄT UND SYSTEM SOWIE DETEKTIONSVERFAHREN UND LESBARES SPEICHERMEDIUM
SYSTÈME ET DISPOSITIF DE DIAGNOSTIC EMBARQUÉ, ET PROCÉDÉ DE DÉTECTION ET SUPPORT D'INFORMATIONS LISIBLE

(30) Priority: 28.05.2019 CN 201910450652
(43) Date of publication of application: 15.12.2021
(73) Proprietor: ZTE Corporation, Shenzhen, Guangdong 518057 (CN)
(72) Inventor: YANG, Qian, Shenzhen, Guangdong 518057 (CN); ZHANG, Jianhua, Shenzhen, Guangdong 518057 (CN); LI, Jian, Shenzhen, Guangdong 518057 (CN); SHI, Jijie, Shenzhen, Guangdong 518057 (CN)
(74) Representative: Betten & Resch
(86) International application number: PCT/CN2020/075596
(87) International publication number: WO 2020/238287

(56) References cited:
- CN-A- 101 430 557
- CN-A- 103 095 799
- CN-A- 103 197 666
- CN-A- 104 090 565
- CN-A- 105 024 869
- CN-A- 108 445 860
- CN-A- 109 565 458
- US-A1- 2013 317 693
- US-B2- 8 027 763

## Description

### TECHNICAL FIELD

Embodiments of the present disclosure relate to, but are not limited to, an on-board diagnostics device and system, a testing method and a computer-readable storage medium.

### BACKGROUND

On-Board Diagnostics (OBD) systems are used to monitor the running state of engines and the operating condition of exhaust gas after-treatment systems in real time. Once a situation that may cause excessive emissions is found, a warning will be issued immediately. When a system failure occurs, a fault light or an engine-checking warning light is on. At the same time, the OBD system will store fault information in a memory, and relevant information can be read in the form of a fault code through standard diagnostic instruments and diagnostic interfaces. According to the indication of the fault code, maintenance personnel can quickly and accurately identify and locate the fault. The OBD systems ensure the safety of vehicle travel and record the condition of vehicle. At present, there are not so many OBD products in the market, which therefore have become a research direction for major companies that are developing their own on-board products.

For the OBD products in the related technologies, the main idea basically uses a Microcontroller Unit (MCU) chip, on which a 4G on-board module is mounted, and chips supporting on-board related protocols are added to the periphery of the MCU chip, so as to achieve the function of supporting one or several protocols. The products designed by this scheme cannot adapt to various vehicle models because of the limited protocols supported, and OBD products for different vehicle manufacturers need to be designed separately. There are many peripheral devices required, causing a large layout area and high hardware design costs, which lead to the limitation of the appearance and size of the OBD products and other related defects, and the signal communication, matching, etc. between the on-board protocol chip and MCU are prone to failure, which is also a problem that hardware design personnel need to solve.

US20130317693A1 relates to a rental/car-share (RCS) vehicle access and management system and method, in some embodiments, utilizes barcodes, QR codes (or NFC/RFID), GPS, and a mobile app coupled with a wireless network to enable customers to bypass the reservation desk and pickup and drop off reserved RCS vehicles using a mobile phone, tablet or laptop.

CN104090565A relates to a vehicle data collecting device adaptive to an OBD II interface and self-adaptive to various vehicle bus and diagnostic protocols. The vehicle data collecting device comprises a program-control multi-switch switching module, an auxiliary voltage distributing module, a first bus transceiver module, a second bus transceiver module, an MCU, a nonvolatile storage device, a GPS positioning module, a wireless communication module and a power conversion and control module. The program-control multi-switch switching module is used for receiving a command of the MCU and controlling gating of the OBD II manufacturer customized interface and pins of the MCU.

CN108445860A relates to diagnosis equipment, a diagnosis request processing method and a computer readable storage medium. The diagnosis equipment comprises a controller module, a transceiver module and a connection control switch module, wherein one end of the controller module is connected with a host, the other end is connected with one end of the connection control switch module, the other endof the connection control switch module is connected with one end of the transceiver module, the other end of the transceiver module is connected with an automobile diagnosis system, the controller module is used for receiving a diagnosis request sent by the host, a first connection instruction is determined according to the diagnosis request, the first connection instruction is transmitted to the connection control switch module, a target transceiver is determined by the connection control switch module from the transceiver module according to the first connection instruction, the target transceiver and the controller module are controlled for communication, after communication, the diagnosis request is transmitted by the controller module through the target transceiver to the automobilediagnosis system.

### SUMMARY

The invention is set out in the appended set of claims.

An on-board diagnostics system, a testing method and a computer-readable storage medium are provided.

The on-board diagnostics system incldues: an on-board diagnostics device; and an interface protection and conversion module, the interface protection and conversion module includes pins; the on-board diagnostics device comprising: a master control module, a controller, a selection module, and a plurality of protocol transceivers, wherein: the master control module is configured to control the controller, the selection module and the plurality of protocol transceivers, and to transmit and receive data based on a selected protocol transceiver and the pins corresponding to the selected protocol transceiver; the controller is configured to receive an external control signal, and to control the selection module according to the external control signal; the selection module is connected to some or all of the protocol transceivers and configured to switch between different protocol transceivers and the pins according to the control of the controller; and the protocol transceivers are configured to transmit and receive data of supported protocols; wherein the on-board diagnostics device is packaged as a single chip, the single chip supports multiple CAN protocols; the selection module comprises a plurality of switches to switch the supported multiple CAN protocols.

The testing method applied to the on-board diagnostics system as described above, includes: receiving a control signal and selecting a corresponding protocol transceiver and pins; and sending protocol data corresponding to the selected protocol transceiver based on the selected pins, and determining whether an in-vehicle infotainment to be tested supports data transmission and reception based on the selected pins and the selected protocol transceiver according to whether a feedback is received from the in-vehicle infotainment to be tested.

The computer-readable storage medium stores one or more programs, which are executable by one or more processors to perform the testing method as described above.Additional features and advantages of the present disclosure will be set forth in the subsequent description, and in part will become apparent from the description, or may be learned by practice of the present disclosure. The purposes and other advantages of the present disclosure can be realized and obtained by structures particularly noted in the description, the claims and the accompanying drawings.

### BRIEF DESCRIPTION OF DRAWINGS

The accompanying drawings are used to provide a further understanding of the technical schemes of the present disclosure and constitute a part of the description. The accompanying drawings are used to explain the technical schemes of the present disclosure together with the embodiments of the present disclosure, and do not constitute a restriction on the technical schemes of the present disclosure.
Fig. 1 is a schematic diagram of an on-board diagnostics device provided by an embodiment of the present disclosure;
Fig. 2 is a schematic diagram of an on-board diagnostics device (particularly an example of transceivers) provided by another embodiment of the present disclosure;
Fig. 3 is a schematic diagram of an on-board diagnostics device (particularly an example of implementation of a selection module) provided by another embodiment of the present disclosure;
Fig. 4 is a block diagram of an on-board diagnostics system provided by an embodiment of the present disclosure;
Fig. 5 is a flowchart of a testing method provided by an embodiment of the present disclosure;
Fig. 6 is a flowchart of the determination of K/L one/two-wire data communication provided by an embodiment of the present disclosure;
Fig. 7 is a flowchart of the determination of secondary CAN selection provided by an embodiment of the present disclosure;
Fig. 8 is a flowchart of the overall determination provided by an embodiment of the present disclosure;
Fig. 9 is a block diagram of a testing device provided by an embodiment of the present disclosure; and
Fig. 10 is a block diagram of a computer-readable storage medium provided by an embodiment of the present disclosure.

### DETAILED DESCRIPTION

In order to make the purposes, technical schemes and advantages of the present disclosure clear, embodiments of the present disclosure will be described hereinafter in detail with reference to the accompanying drawings. It should be noted that embodiments in the present disclosure and features in the embodiments can be combined to derive other embodiments not explicitly described.

The steps shown in the flowcharts of the drawings may be performed in a computer system, such as with a set of computer-executable instructions. Moreover, although a logical order is shown in the flowcharts, the steps shown or described may be performed, in some cases, in a different order than shown or described herein.

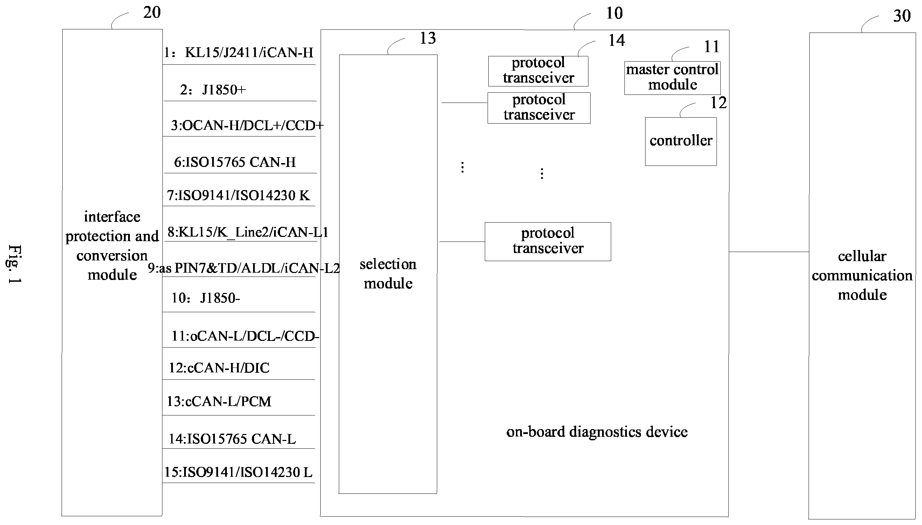

The present disclosure describes in detail an OBD interface-based on-board diagnostics system, which includes: an on-board diagnostics device; and an interface protection and conversion module, and the interface protection and conversion module includes pins, the on-board diagnostics device supports multiple protocols. An MCU chip in the traditional OBD product is changed herein, and chips supporting related on-board product protocols that are originally implemented by using peripheral devices are functionally combined with the traditional MCU. Fig. 1 is a block diagram of an on-board diagnostics device provided in an embodiment of the present disclosure. As shown in Fig. 1, the on-board diagnostics device 10 provided in this embodiment includes a master control module 11, a controller 12, a selection module 13 and a plurality of protocol transceivers 14. The selection module 13 is connected to some or all of the protocol transceivers.

The master control module 11 is configured to control the controller, the selection module and the plurality of protocol transceivers, and to transmit and receive data based on a selected protocol transceiver and the pins corresponding to the selected protocol transceiver.

The controller 12 is configured to receive an external control signal, and to control the selection module according to the external control signal.

The selection module 13 is configured to switch between different protocol transceivers and pins according to the control of the controller. Each protocol transceiver and corresponding pins support one OBD protocol, so that multiple OBD protocols can be supported. It is mainly to meet the requirements of switching between multiple protocols supported by OBD, so as to achieve the purpose that one apparatus can match multiple models.

The protocol transceivers 14 are configured to transmit and receive data of supported protocols.

The on-board diagnostics device may be connected to an interface protection and conversion module 20 and a cellular communication module 30. The interface protection and conversion module includes a plurality of pins. A pin 1 (pin1) refers to a multiplexed KL15/J2411/iCAN-H signal, pin2 refers to a J1850+ signal, pin3 refers to a signal, pin4 refers to a KL31 ground signal, pin5 refers to a signal ground signal, pin6 refers to an ISO15765 CAN-H signal, pin7 refers to a multiplexed ISO9141/ISO14230 K signal, pin8 refers to a multiplexed KL15/K_Line2/iCAN-L1 signal, pin9 refers to a multiplexed TD/ALDL/iCAN-L2 signal, pin10 refers to a J1850- signal, pin11 refers to a multiplexed oCAN-L/DCL-/CCD-signal, pin12 refers to a multiplexed cCAN-H/DIC signal, pin13 refers to a multiplexed cCAN-L/PCM signal, pin14 refers to an ISO15765 CAN-L signal, pin15 refers to a multiplexed ISO9141/ISO14230 L signal, and pin16 refers to a KL30 electrical signal.

According to the scheme provided in this embodiment, the transceivers of different protocols are switched by means of the controller and the selection module, which can support various OBD standard protocols and support communication of various vehicle models. Compared with the use of an MCU and chips with peripheral support for on-board related protocols in the related technologies, the on-board diagnostics device integrates various protocol transceivers with an MCU, which can be smaller than the traditional OBD, and which also solves related faults that may occur in communication between different original chips, and has more stable performance and greatly improved product reliability.

In an embodiment, the on-board diagnostics device is packaged as a single chip. The single chip may be implemented by means of a Field-Programmable Gate Array (FPGA) a Complex Programmable Logic Device (CPLD), etc., and the cost thereof can be optimized in various ways as desired, to meet different cost requirements. The selection module can be implemented in many ways, for example, by using a switch. Therefore, such a single-module package and the internal logic thereof are changeable, flexible and diverse, and can be customized according to different product requirements. According to the scheme provided in this embodiment, the on-board diagnostics device is implemented in the form of a single chip, which enables the MCU chip to integrate functions such as operation, control, protocol support and communication, and reduces the number of peripheral devices while increasing the size of the MCU chip, thus reducing the layout area of the whole board as a whole. Due to the integration of the protocol chips, the related faults that may occur in the communication between different original chips are also solved, and the product reliability is greatly improved.

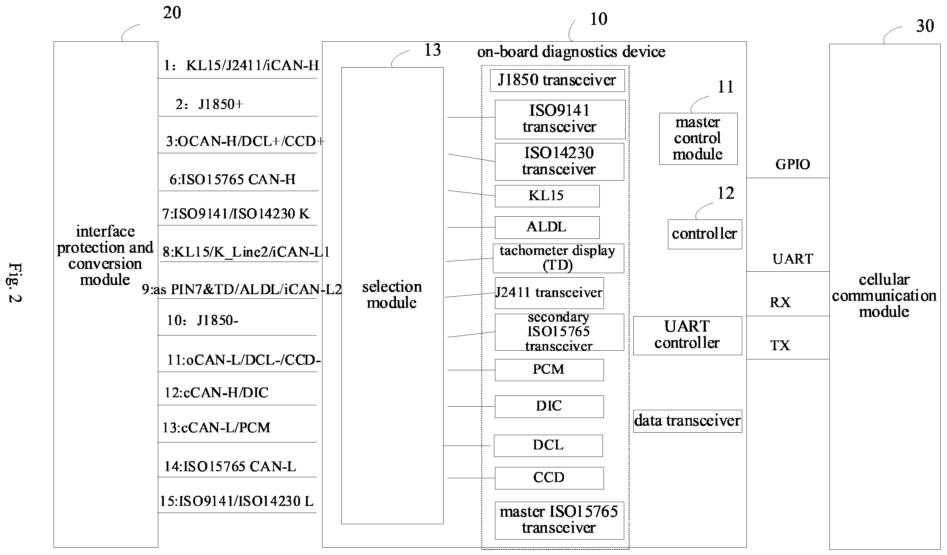

As shown in Fig. 2, the plurality of protocol transceivers may include any combination of the following transceivers: J1850 transceiver, ISO9141 transceiver, ISO14230 transceiver, KL15 (Ignition-on signal), ALDL, Tachometer Display (TD), J2411 transceiver, secondary ISO15765 transceiver, PCM, DIC, DCL, CCD, master ISO15765 transceiver.

The J1850 transceiver may receive and send signals supporting a J1850 protocol.

The ISO9141 transceiver may receive and send signals supporting an ISO9141 protocol.

The ISO14230 transceiver may receive and send signals supporting an ISO14230 protocol.

The KL15 may receive and send automobile ignition signals defined by an automobile standard.

The ALDL may receive and send signals based on an ALDL protocol. The ALDL protocol is a protocol developed by General Motors to enable communication between an external apparatus and an electronic control unit.

The TD may receive and send tachometer display signals.

The J2411 transceiver may receive and send single-channel Controller Area Network (CAN) signals.

The secondary ISO15765 transceiver may receive and send multiple-channel CAN signals.

The PCM may receive and send audio signals defined in automobile standards.

The master ISO15765 transceiver may receive and send master CAN signals.

The controller is controlled based on General-Purpose IO (GPIO) signals.

It should be noted that the on-board diagnostics device further includes a Universal Asynchronous Receiver/Transmitter (UART) controller and a data transceiver. The UART controller is configured to receive and send UART serial port signals. The data transceiver mainly receives and sends all the data in the single chip, and furthermore includes other power supply, storage, control and operation units to ensure the normal operation of the single chip.

One secondary ISO15765 transceiver may be provided, which performs switching by means of a plurality of switches. In another embodiment, if the response time and convenience are taken into consideration, four secondary ISO15765 transceivers may be provided, and such a one-to-one connection is more convenient.

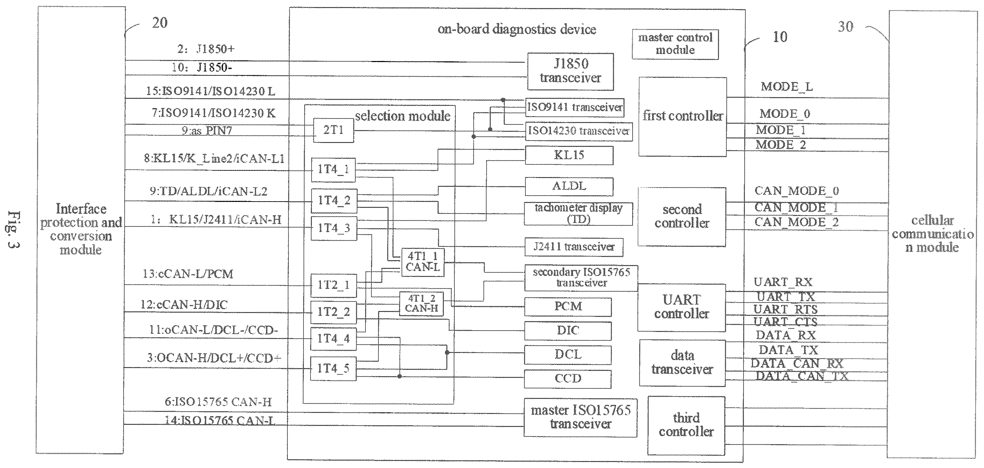

Fig. 3 is a specific embodiment of an on-board diagnostics device. As shown in Fig. 3, the selection module includes a plurality of switches, including a switch 2T1, a switch 1T4_1, a switch 1T4_2, a switch 1T4_3, a switch 1T4_4, a switch 1T4_5, a switch 1T2_1, a switch 1T2_2, a switch 4T1_1 CNL-L and a switch 4T1_2 CAN-H. One side of the switch 2T1 is connected to pin7 and pin9, and the other side thereof is connected to the ISO9141 transceiver and the ISO14230 transceiver. One side of the switch 1T4_1 is connected to pin8, and the other side thereof is connected to the switch 4T1_1 CAN-L, the KL15, the ISO9141 transceiver and the ISO14230 transceiver. One side of the switch 1T4_2 is connected to pin9, and the other side thereof is connected to the ALDL, the TD and the switch 4T1_1 CAN-L. One side of the switch 1T4_3 is connected to pin1, and the other side thereof is connected to the KL15, the J2411 transceiver and the switch 4T1_2 CAN-H. One side of the switch 1T2_1 is connected to pin13, and the other side thereof is connected to the switch 4T1_1 CAN-L and the PCM. One side of the switch 1T2_2 is connected to pin12, and the other side thereof is connected to the switch 4T1_2 CAN-H and the DIC. One side of the switch 1T4_4 is connected to pin11, and the other side thereof is connected to the switch 4T1_1 CAN-L, the DCL and the CCD. One side of the switch 1T4_5 is connected to pin3, and the other side thereof is connected to the switch 4T1_2 CAN-H, the DCL and the CCD. It can be seen from Fig. 3 that, after passing through the interface protection and conversion module 20, 13 signal lines are all connected to the on-board diagnostics device 10, pin2 and pin10 are special pins for the J1850 protocol and are therefore directly connected to the J1850 transceiver of the on-board diagnostics device, pin6 and pin14 are special pins for ISO15765 master CAN signals and are therefore directly connected to the master ISO15765 transceiver of the on-board diagnostics device, and the two groups of signals are not switched by means of the selection module. The functional definitions of pin7 and pin9 are the same, but the pins used by different manufacturers are different. Therefore, in this embodiment, there is a 2T1 switch in the selection module for switching signals from pin7 and pin9. Similarly, since the single chip supports multiple CAN protocols, a plurality of switches 1T4 (1T4_1 to 1T4_5), 1T2 (1T2_1 and 1T2_2) and 4T1 (4T1_1 CAN-L and 4T1_2 CAN-H) are provided in the selection module to switch the multiple CAN protocols.

As shown in Fig. 3, the controller may include a first controller. The first controller (or called mode controller) is configured to receive a zeroth control signal (MODE _0), a first control signal (MODE_1), a second control signal (MODE_2) and a third control signal (MODE_L), and to control, according to the zeroth control signal, the first control signal, the second control signal and the third control signal, the selection module to switch between the protocol transceivers and pins which support a one-wire ISO9141 protocol, a two-wire ISO9141 protocol, a one-wire ISO14230 protocol and a two-wire ISO14230 protocol. Reference can be made to Table 1 below for details.

In an embodiment, the controller includes a second controller (or called secondary CAN controller), which is configured to receive a fourth control signal (CAN_MODE_0), a fifth control signal (CAN_MODE_1) and a sixth control signal (CAN_MODE_2), and to control, according to the fourth control signal, the fifth control signal and the sixth control signal, the selection module to switch between the protocol transceivers and pins corresponding to a J2411 protocol and an ISO15765 protocol of different pins. Reference can be made to Table 2 below for details.

In an embodiment, the controller includes a third controller, which is configured to receive a seventh control signal, an eighth control signal and a ninth control signal, and to control, according to the seventh control signal, the eighth control signal and the ninth control signal, the selection module to switch between a transceiver that supports KL15 signals, a transceiver that supports TD signals, a transceiver that supports ALDL signals, a transceiver that supports DCL signals and a transceiver that supports CCD signals, based on different pins, respectively.

MODE_0, MODE_1, MODE_2 and MODE_L meet the requirements of the following table:

**Table 1 Truth table of MODE_0, MODE_1, MODE_2 and MODE_L**

| | MODE_0 | MODE_1 | MODE_2 | MODE_L | Supported protocol(s) |
|---|---|---|---|---|---|
| | | | | | Selected pin(s) |
| | 0 | 0 | 0 | 0 | ISO9141/pin7, pin15 |
| | 0 | 0 | 0 | 1 | ISO9141/pin7 |
| | 0 | 0 | 1 | 0 | ISO9141/pin9, pin15 |
| | 0 | 0 | 1 | 1 | ISO9141/pin9 |
| | 0 | 1 | 0 | 0 | ISO14230/pin7, pin15 |
| | 0 | 1 | 0 | 1 | ISO14230/pin7 |
| Level | 0 | 1 | 1 | 0 | ISO14230/pin9, pin15 |
| | 0 | 1 | 1 | 1 | ISO14230/pin9 |
| | 1 | 0 | 0 | 0 | ISO9141/pin8, pin15 |
| | 1 | 0 | 0 | 1 | ISO9141/pin8 |
| | 1 | 0 | 1 | 0 | ISO14230/pin8, pin15 |
| | 1 | 0 | 1 | 1 | ISO14230/pin8 |
| | 1 | 1 | 1 | 1 | ISO9141 and ISO14230 protocols are not supported |

In this table, since among on-board products, some in-vehicle infotainments have single K-line communication, and some in-vehicle infotainments have K-line and L-line dual-channel communication, determination is made by using Table 1 above. When the cellular communication module simultaneously sets the signals MODE_0, MODE_1, MODE_2 and MODE_L of the mode controller to be low, the 2T1 switch is turned on, and the single chip sends K-line and L-line two-wire data signals supporting the ISO9141 protocol to an in-vehicle infotainment by means of pin7 and pin15, and waits for a preset time (the specific duration of which is set as required). If the in-vehicle infotainment feeds back data, it is considered that the in-vehicle infotainment supports a K-line and L-line two-wire data service related to the ISO9141 protocol by means of pin7 and pin15. If the in-vehicle infotainment has no feedback, it is considered that pin7 and pin15 of the in-vehicle infotainment do not support the ISO9141 two-wire data service. When MODE_0, MODE_1 and MODE_2 are set to be low and MODE_L is set to be high, the single chip sends single K-line data supporting the ISO9141 protocol to the in-vehicle infotainment by means of pin7, and waits for a period of time. If the in-vehicle infotainment feeds back data, it is considered that the in-vehicle infotainment supports a single K-line data service related to the ISO9141 protocol by means of pin7. If the in-vehicle infotainment still has no feedback, it is considered that pin7 of the in-vehicle infotainment does not support the ISO9141 protocol, and the process continues to proceed according to Table 1 above. By analogy, after a certain mode is determined successfully, it is considered that the in-vehicle infotainment has K/L one/two-wire communication requirements. After the corresponding pins and supported protocol are determined, the in-vehicle infotainment performs data transmission and reception services with the cellular communication module by means of DATA_RX and DATA_TX.

All the determinations are made according to Table 1, if none of them is satisfied, MODE_0, MODE_1, MODE_2 and MODE_L are all set to be high, indicating that the in-vehicle infotainment does not support ISO9141 and ISO14230 communication protocols. It should be noted that setting all of them to be high is only an example, and they may be set to other values as required, which are different from the values occupied in Table 1. In addition, Table 1 is only an example, and the correspondence between the values of MODE_0, MODE_1, MODE_2 and MODE_L, and the supported protocols and the selected pins may be altered as required.

A secondary CAN controller is added in the communication between the single chip and the cellular communication module, and communication signals CAN_MODE_0, CAN_MODE_1 and CAN_MODE_2 between them are selected for different CAN signals. Similarly, CAN_MODE_0, CAN_MODE_1 and CAN_MODE_2 satisfy the following truth table:

**Table 2 Truth Table of CAN_MODE_0, CAN_MODE_1 and CAN_MODE_2**

| | Level | | | | | |
|---|---|---|---|---|---|---|
| CAN_MODE_0 | 0 | 0 | 0 | 1 | 1 | 1 |
| CAN_MODE_1 | 0 | 1 | 1 | 0 | 0 | 1 |
| CAN_MODE_2 | 0 | 0 | 1 | 0 | 1 | 1 |
| Supported protocol(s) Selected pin(s) | J2411 pin1 | ISO15765 pin1, pin8① | ISO15765 pin1, pin9① | ISO15765 pin12, pin13 | ISO15765 pin3, pin11 | Secondary CAN not supported |

| | | | | | | |
|---|---|---|---|---|---|---|
| ① Note: pin8 and pin9 can be both defined as iCAN_L signals, which are defined differently by different manufacturers, so it is necessary to make a mode determination. | | | | | | |

In the above table, when the cellular communication module sets CAN_MODE_0, CAN_MODE_1 and CAN_MODE_2 to be low level signals, the switches 4T1_1 and 1T4_3 of the analog switches are turned on, and thus the single chip sends a signal supporting the J2411 protocol to the in-vehicle infotainment by means of pin1 and waits for a feedback from the in-vehicle infotainment. If there is a feedback from the in-vehicle infotainment within a preset time, the cellular communication module communicates with the in-vehicle infotainment by means of the single chip. If there is no feedback from the in-vehicle infotainment within the preset time, it is considered that the in-vehicle infotainment does not support the J2411 protocol. The cellular communication module controls CAN_MODE_0 and CAN_MODE_2 to be low and CAN_MODE_1 to be high, the switches 1T4_1, 1T4_3, 4T1_1 and 4T1_2 are then turned on at the same time, and the single chip sends data of ISO15765 protocol to the in-vehicle infotainment by means of pin1 and pin8 and waits for a feedback from the in-vehicle infotainment. If there is a feedback from the in-vehicle infotainment within a preset time, it is considered that pin1 and pin8 of the in-vehicle infotainment support the ISO15765 protocol, and the module communicates with the in-vehicle infotainment by means of a single chip. If there is no feedback from the in-vehicle infotainment within the preset time, the process continues to repeat the previous step according to Table 2.

Similarly, if all the determinations of the secondary CAN transceiver have been made but none of them is satisfied, the cellular communication module sets all CAN_MODE_0, CAN_MODE_1 and CAN_MODE_2 to be high, indicating that there is no secondary CAN demand for this vehicle model. It should be noted that setting all of them to be high is only an example, and they may be set to other values as required, which are different from the values occupied in Table 2. In addition, Table 2 is only an example, and the correspondence between the values of CAN_MODE_0, CAN_MODE_1 and CAN_MODE_2, and the supported protocols and the selected pins may be altered as required.

In the embodiment of the present disclosure, the transceivers of different protocols are switched by the selection module in the single chip, and the transceivers of different protocols are controlled by the controller, so as to automatically adapt to various OBD standard protocols and support the communication of various vehicle models.

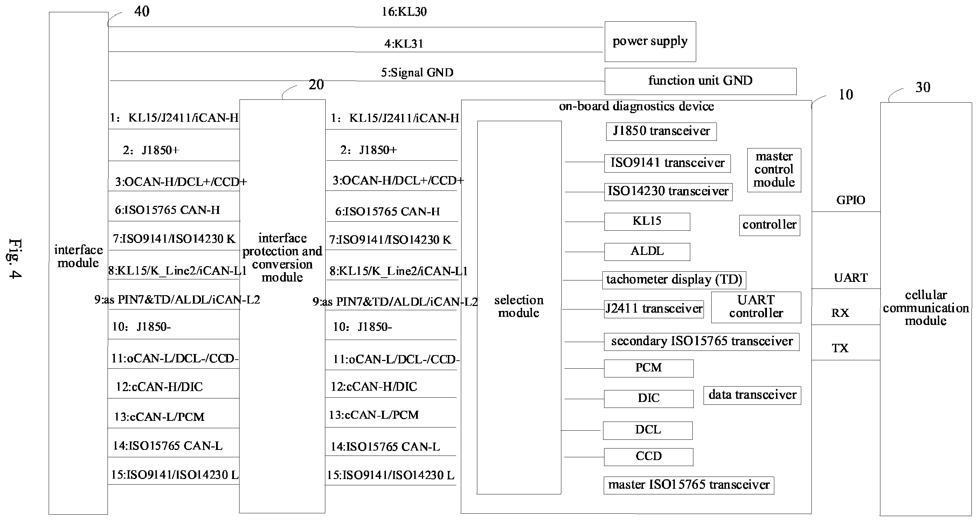

As shown in Fig. 4, an on-board diagnostics system, which includes an on-board diagnostics device 10, an interface module 40, an interface protection and conversion module 20, and a cellular communication module 30. The interface module 40 is configured to be connected to an external in-vehicle infotainment, the interface protection and conversion module 20 is connected to the interface module 40 and the on-board diagnostics device 10, and the on-board diagnostics device 10 is connected to the cellular communication module 30.

The interface module 40 is configured to be connected to an on-board diagnostics system interface of the in-vehicle infotainment. The interface module is for example a J1962 connector with 16 pins, which is a standard OBD interface.

The interface protection and conversion module 20 is configured to convert signals between the interface module 40 and the on-board diagnostics device 10 for matching. Since the level used by automobiles is generally 12V or 24V, the high level of signals received by the OBD interface is also the corresponding 12V/24V signals, but the level of the on-board diagnostics device 10 is generally lower, a device is added between the interface module 40 and the on-board diagnostics device 10 to match the levels on two sides. This device can realize electrostatic protection, filtering, level conversion, etc., and the signal after level conversion is input to the on-board diagnostics device 10. The interface protection and conversion module 20 can perform electro-static discharge (ESD)/Electromagnetic Interference (EMI) protection and 12V/24V level conversion.

The cellular communication module 30 is configured to enable communication between the on-board diagnostics device 10 and an external network, which may include an in-vehicle infotainment network and a control center network for controlling the in-vehicle infotainment.

Pin16 and pin4 of the interface module of the on-board diagnostics system are connected to a power supply, and pin5 is connected to the function unit ground.

The cellular communication module 30 is further configured to send a control signal to the on-board diagnostics device 10.

The on-board diagnostics device 10 is further configured to select a corresponding protocol transceiver and pins according to the control signal, to send protocol data corresponding to the selected protocol transceiver based on the selected pins, to determine whether the in-vehicle infotainment to be tested supports data transmission and reception based on the selected pins and the selected protocol transceiver according to whether a feedback is received from the in-vehicle infotainment to be tested, and to communicate with the in-vehicle infotainment to be tested based on the protocol transceiver and corresponding pins supported by the in-vehicle infotainment to be tested.

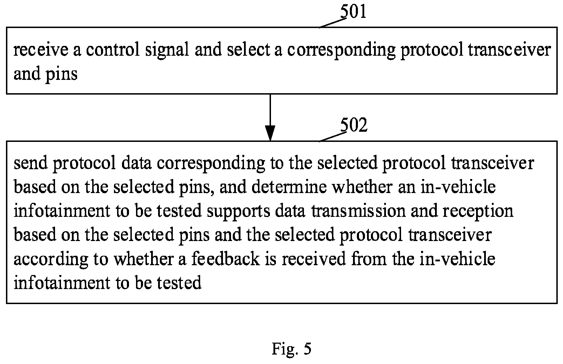

An embodiment of the present disclosure provides a testing method, as shown in Fig. 5, which is applied to the on-board diagnostics device described in any embodiment, and includes:
- step 501: receiving a control signal and selecting a corresponding protocol transceiver and pins;
- step 502: sending protocol data corresponding to the selected protocol transceiver based on the selected pins, and determining whether the in-vehicle infotainment to be tested supports data transmission and reception based on the selected pins and the selected protocol transceiver according to whether a feedback is received from the in-vehicle infotainment to be tested.

In an embodiment, in step 502, the determining whether the in-vehicle infotainment to be tested supports data transmission and reception based on the selected pins and the selected protocol transceiver according to whether a feedback is received from the in-vehicle infotainment to be tested includes:
- determining that the in-vehicle infotainment to be tested supports the data transmission and reception based on the selected pins and the selected protocol transceiver if a feedback is received from the in-vehicle infotainment to be tested within a preset time;
- determining that the in-vehicle infotainment to be tested does not support the data transmission and reception based on the selected pins and the selected protocol transceiver if no feedback is received from the in-vehicle infotainment to be tested within the preset time.

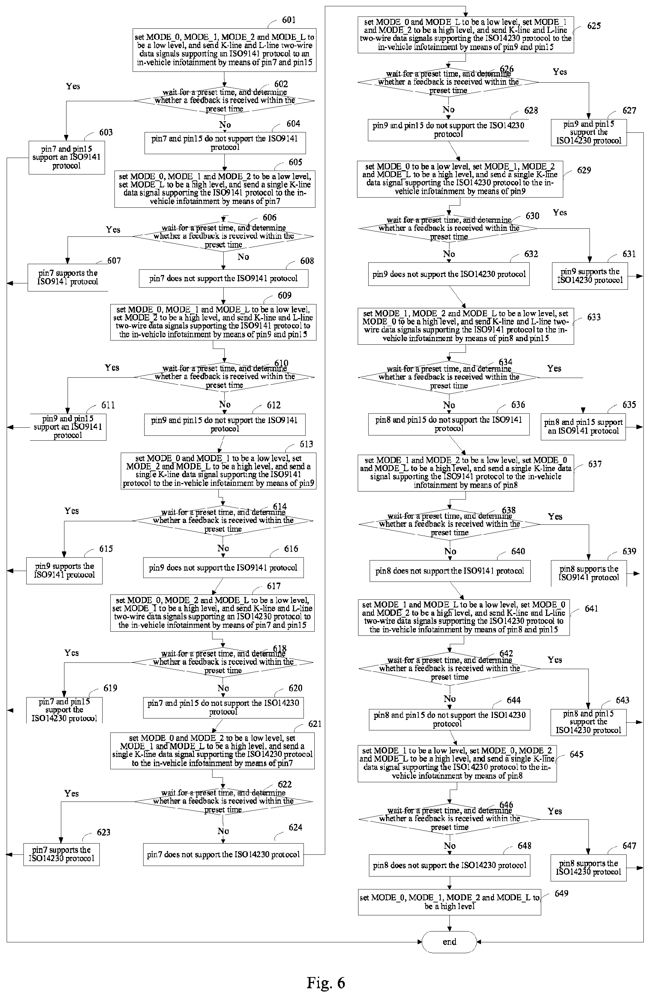

Fig. 6 is a flowchart of the determination of K/L one/two-wire data communication provided by an embodiment of the present disclosure. As shown in Fig. 6, the flowchart includes the following steps.

At step 601, MODE_0, MODE_1, MODE_2 and MODE_L are all set to be a low level, and K-line and L-line two-wire data signals supporting an ISO9141 protocol are sent to an in-vehicle infotainment by means of pin7 and pin15.

At step 602, waiting is performed for a preset time (the specific duration of which is set as required), determination is made on whether a feedback is received from the in-vehicle infotainment within the preset time, and if feedback data is received from the in-vehicle infotainment, step 603 is executed; otherwise, step 604 is executed.

At step 603, the in-vehicle infotainment supports a K-line and L-line two-wire data service related to the ISO9141 protocol by means of pin7 and pin15, and the process ends.

At step 604, it is considered that pin7 and pin15 of the in-vehicle infotainment do not support an ISO9141 two-wire data service.

At step 605, MODE_0, MODE_1 and MODE_2 are set to be a low level, MODE_L is set to be a high level, and a single K-line data signal supporting the ISO9141 protocol is sent to the in-vehicle infotainment by means of pin7.

At step 606, waiting is performed for a preset time (the specific duration of which is set as required), determination is made on whether a feedback is received from the in-vehicle infotainment within the preset time, and if feedback data is received from the in-vehicle infotainment, step 607 is executed; otherwise, step 608 is executed.

At step 607, the in-vehicle infotainment supports a single K-line data service related to the ISO9141 protocol by means of pin7, and the process ends.

At step 608, it is considered that pin7 of the in-vehicle infotainment does not support an ISO9141 data service.

At step 609, MODE_0, MODE_1 and MODE_L are set to be a low level, MODE_2 is set to be a high level, and K-line and L-line two-wire data signals supporting the ISO9141 protocol are sent to the in-vehicle infotainment by means of pin9 and pin15.

At step 610, waiting is performed for a preset time (the specific duration of which is set as required), determination is made on whether a feedback is received from the in-vehicle infotainment within the preset time, and if feedback data is received from the in-vehicle infotainment, step 611 is executed; otherwise, step 612 is executed.

At step 611, it is determined that the in-vehicle infotainment supports a K-line and L-line two-wire data service related to the ISO9141 protocol by means of pin9 and pin15, and the process ends.

At step 612, it is considered that the in-vehicle infotainment does not support the K-line and L-line two-wire data service related to the ISO9141 protocol by means of pin9 and pin15.

At step 613, MODE_0 and MODE_1 are set to be a low level, MODE_2 and MODE_L are set to be a high level, and a single K-line data signal supporting the ISO9141 protocol is sent to the in-vehicle infotainment by means of pin9.

At step 614, waiting is performed for a preset time (the specific duration of which is set as required), determination is made on whether a feedback is received from the in-vehicle infotainment within the preset time, and if feedback data is received from the in-vehicle infotainment, step 515 is executed; otherwise, step 516 is executed.

At step 615, it is determined that the in-vehicle infotainment supports a single K-line data service related to the ISO9141 protocol by means of pin9, and the process ends.

At step 616, it is considered that the in-vehicle infotainment does not support the single K-line data service related to the ISO9141 protocol by means of pin9.

At step 617, MODE_0, MODE_2 and MODE_L are set to be a low level, MODE_1 is set to be a high level, and K-line and L-line two-wire data signals supporting an ISO14230 protocol are sent to the in-vehicle infotainment by means of pin7 and pin15.

At step 618, waiting is performed for a preset time (the specific duration of which is set as required), determination is made on whether a feedback is received from the in-vehicle infotainment within the preset time, and if feedback data is received from the in-vehicle infotainment, step 619 is executed; otherwise, step 620 is executed.

At step 619, it is determined that the in-vehicle infotainment supports a K-line and L-line two-wire data service related to the ISO14230 protocol by means of pin7 and pin15, and the process ends.

At step 620, it is considered that the in-vehicle infotainment does not support the K-line and L-line two-wire data service related to the ISO14230 protocol by means of pin7 and pin15.

At step 621, MODE_0 and MODE_2 are set to be a low level, MODE_1 and MODE_L are set to be a high level, and a single K-line data signal supporting the ISO14230 protocol is sent to the in-vehicle infotainment by means of pin7.

At step 622, waiting is performed for a preset time (the specific duration of which is set as required), determination is made on whether a feedback is received from the in-vehicle infotainment within the preset time, and if feedback data is received from the in-vehicle infotainment, step 623 is executed; otherwise, step 624 is executed.

At step 623, it is determined that the in-vehicle infotainment supports a single K-line data service related to the ISO14230 protocol by means of pin7, and the process ends.

At step 624, it is considered that the in-vehicle infotainment does not support the single K-line data service related to the ISO14230 protocol by means of pin7.

At step 625, MODE_0 and MODE_L are set to be a low level, MODE_1 and MODE_2 are set to be a high level, and K-line and L-line two-wire data signals supporting an ISO14230 protocol are sent to the in-vehicle infotainment by means of pin9 and pin15.

At step 626, waiting is performed for a preset time (the specific duration of which is set as required), determination is made on whether a feedback is received from the in-vehicle infotainment within the preset time, and if feedback data is received from the in-vehicle infotainment, step 627 is executed; otherwise, step 628 is executed.

At step 627, it is determined that the in-vehicle infotainment supports a K-line and L-line two-wire data service related to the ISO14230 protocol by means of pin9 and pin15, and the process ends.

At step 628, it is considered that the in-vehicle infotainment does not support the K-line and L-line two-wire data service related to the ISO14230 protocol by means of pin9 and pin15.

At step 629, MODE_0 is set to be a low level, MODE_1, MODE_2 and MODE_L are set to be a high level, and a single K-line data signal supporting the ISO14230 protocol is sent to the in-vehicle infotainment by means of pin9.

At step 630, waiting is performed for a preset time (the specific duration of which is set as required), determination is made on whether a feedback is received from the in-vehicle infotainment within the preset time, and if feedback data is received from the in-vehicle infotainment, step 631 is executed; otherwise, step 632 is executed.

At step 631, it is determined that the in-vehicle infotainment supports a single K-line data service related to the ISO14230 protocol by means of pin9, and the process ends.

At step 632, it is considered that the in-vehicle infotainment does not support the single K-line data service related to the ISO14230 protocol by means of pin9.

At step 633, MODE_1, MODE_2 and MODE_L are all set to be a low level, MODE_0 is set to be a high level, and K-line and L-line two-wire data signals supporting an ISO9141 protocol are sent to the in-vehicle infotainment by means of pin8 and pin15.

At step 634, waiting is performed for a preset time (the specific duration of which is set as required), determination is made on whether a feedback is received from the in-vehicle infotainment within the preset time, and if feedback data is received from the in-vehicle infotainment, step 635 is executed; otherwise, step 636 is executed.

At step 635, the in-vehicle infotainment supports a K-line and L-line two-wire data service related to the ISO9141 protocol by means of pin8 and pin15, and the process ends.

At step 636, it is considered that pin8 and pin15 of the in-vehicle infotainment do not support an ISO9141 two-wire data service.

At step 637, MODE_1 and MODE_2 are set to be a low level, MODE_0 and MODE_L are set to be a high level, and a single K-line data signal supporting the ISO9141 protocol is sent to the in-vehicle infotainment by means of pin8.

At step 638, waiting is performed for a preset time (the specific duration of which is set as required), determination is made on whether a feedback is received from the in-vehicle infotainment within the preset time, and if feedback data is received from the in-vehicle infotainment, step 639 is executed; otherwise, step 640 is executed.

At step 639, the in-vehicle infotainment supports a single K-line data service related to the ISO9141 protocol by means of pin8, and the process ends.

At step 640, it is considered that pin8 of the in-vehicle infotainment does not support an ISO9141 data service.

At step 641, MODE_1 and MODE_L are set to be a low level, MODE_0 and MODE_2 are set to be a high level, and K-line and L-line two-wire data signals supporting an ISO14230 protocol are sent to the in-vehicle infotainment by means of pin8 and pin15.

At step 642, waiting is performed for a preset time (the specific duration of which is set as required), determination is made on whether a feedback is received from the in-vehicle infotainment within the preset time, and if feedback data is received from the in-vehicle infotainment, step 643 is executed; otherwise, step 644 is executed.

At step 643, it is determined that the in-vehicle infotainment supports a K-line and L-line two-wire data service related to the ISO14230 protocol by means of pin8 and pin15, and the process ends.

At step 644, it is considered that the in-vehicle infotainment does not support the K-line and L-line two-wire data service related to the ISO14230 protocol by means of pin8 and pin15.

At step 645, MODE_1 is set to be a low level, MODE_0, MODE_2 and MODE_L are set to be a high level, and a single K-line data signal supporting the ISO14230 protocol is sent to the in-vehicle infotainment by means of pin8.

At step 646, waiting is performed for a preset time (the specific duration of which is set as required), determination is made on whether a feedback is received from the in-vehicle infotainment within the preset time, and if feedback data is received from the in-vehicle infotainment, step 647 is executed; otherwise, step 648 is executed.

At step 647, it is determined that the in-vehicle infotainment supports a single K-line data service related to the ISO14230 protocol by means of pin8, and the process ends.

At step 648, it is considered that the in-vehicle infotainment does not support the single K-line data service related to the ISO14230 protocol by means of pin8.

At step 649, MODE_0, MODE_1, MODE_2 and MODE_L are set to be a high level, indicating that the in-vehicle infotainment does not support the ISO9141 and ISO14230 protocols.

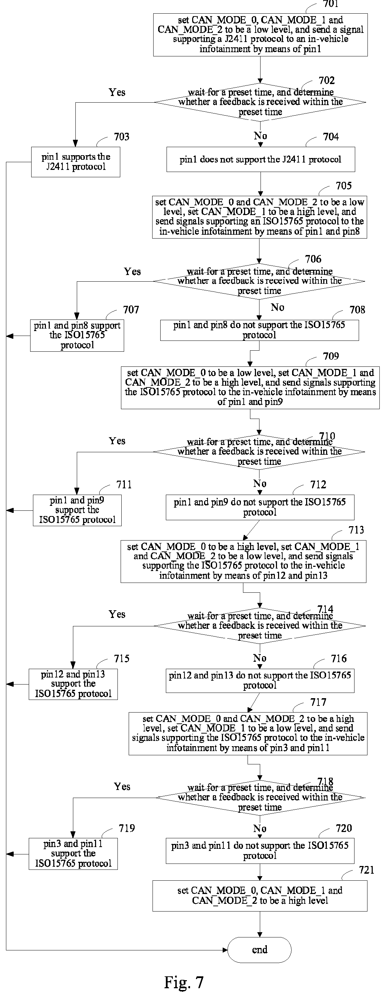

Fig. 7 is a flowchart of the determination of secondary CAN selection provided by an embodiment of the present disclosure. As shown in Fig. 7, the flowchart includes the following steps.

At step 701, CAN_MODE_0, CAN _MODE_1 and CAN_MODE_2 are all set to be a low level, and a signal supporting a J2411 protocol is sent to an in-vehicle infotainment by means of pin1.

At step 702, waiting is performed for a preset time (the specific duration of which is set as required), determination is made on whether a feedback is received from the in-vehicle infotainment within the preset time, and if feedback data is received from the in-vehicle infotainment, step 703 is executed; otherwise, step 704 is executed.

At step 703, it is determined that the in-vehicle infotainment supports a J2411 protocol service by means of pin1, and supports the secondary one-wire CAN communication, and the process ends.

At step 704, it is determined that the in-vehicle infotainment does not support the J2411 protocol service by means of pin1.

At step 705, CAN_MODE_0 and CAN_MODE_2 are set to be a low level, CAN_MODE_1 is set to be a high level, and signals supporting an ISO15765 protocol are sent to the in-vehicle infotainment by means of pin1 and pin8.

At step 706, waiting is performed for a preset time (the specific duration of which is set as required), determination is made on whether a feedback is received from the in-vehicle infotainment within the preset time, and if feedback data is received from the in-vehicle infotainment, step 707 is executed; otherwise, step 708 is executed.

At step 707, it is determined that the in-vehicle infotainment supports secondary two-wire CAN communication of an ISO15765 protocol by means of pin1 and pin8, and the process ends.

At step 708, it is determined that the in-vehicle infotainment does not support the secondary two-wire CAN communication of the ISO15765 protocol by means of pin1 and pin8.

At step 709, CAN_MODE_0 is set to be a low level, CAN_MODE_1 and CAN_MODE_2 are set to be a high level, and signals supporting the ISO15765 protocol are sent to the in-vehicle infotainment by means of pin1 and pin9.

At step 710, waiting is performed for a preset time (the specific duration of which is set as required), determination is made on whether a feedback is received from the in-vehicle infotainment within the preset time, and if feedback data is received from the in-vehicle infotainment, step 711 is executed; otherwise, step 712 is executed.

At step 711, it is determined that the in-vehicle infotainment supports secondary two-wire CAN communication of an ISO15765 protocol by means of pin1 and pin9, and the process ends.

At step 712, it is determined that the in-vehicle infotainment does not support the secondary two-wire CAN communication of the ISO15765 protocol by means of pin1 and pin9.

At step 713, CAN_MODE_0 is set to be a high level, CAN_MODE_1 and CAN_MODE_2 are set to be a low level, and signals supporting the ISO15765 protocol are sent to the in-vehicle infotainment by means of pin12 and pin13.

At step 714, waiting is performed for a preset time (the specific duration of which is set as required), determination is made on whether a feedback is received from the in-vehicle infotainment within the preset time, and if feedback data is received from the in-vehicle infotainment, step 715 is executed; otherwise, step 716 is executed.

At step 715, it is determined that the in-vehicle infotainment supports secondary two-wire CAN communication of an ISO15765 protocol by means of pin12 and pin13, and the process ends.

At step 716, it is determined that the in-vehicle infotainment does not support the secondary two-wire CAN communication of the ISO15765 protocol by means of pin12 and pin13.

At step 717, CAN_MODE_0 and CAN_MODE_2 are set to be a high level, CAN_MODE_1 is set to be a low level, and signals supporting an ISO15765 protocol are sent to the in-vehicle infotainment by means of pin3 and pin11.

At step 718, waiting is performed for a preset time (the specific duration of which is set as required), determination is made on whether a feedback is received from the in-vehicle infotainment within the preset time, and if feedback data is received from the in-vehicle infotainment, step 719 is executed; otherwise, step 720 is executed.

At step 719, it is determined that the in-vehicle infotainment supports secondary two-wire CAN communication of an ISO15765 protocol by means of pin3 and pin11, and the process ends.

At step 720, it is determined that the in-vehicle infotainment does not support the secondary two-wire CAN communication of the ISO15765 protocol by means of pin3 and pin11.

At step 721, CAN_MODE_0, CAN_MODE_1 and CAN_MODE_2 are all set to be a high level, indicating that the in-vehicle infotainment does not support secondary CAN communication.

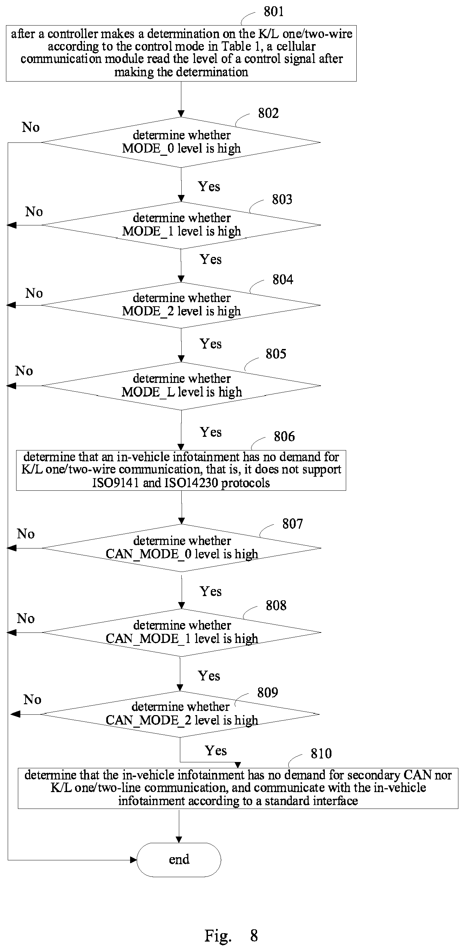

In an embodiment, determination may be made to the single chip as a whole, as shown in Fig. 8, which includes the following steps.

At step 801, after the controller makes a determination on the K/L one/two-wire according to the control mode in Table 1, the cellular communication module reads the level of a control signal after making the determination.

At step 802, determination is made on whether a MODE_0 level is high, and if it is low, the process ends, otherwise step 803 is executed.

At step 803, determination is made on whether a MODE_1 level is high, and if it is low, the process ends, otherwise step 804 is executed.

At step 804, determination is made on whether a MODE_2 level is high, and if it is low, the process ends, otherwise step 805 is executed.

At step 805, determination is made on whether a MODE_L level is high, and if it is low, the process ends, otherwise step 806 is executed.

At step 806, it is determined that the in-vehicle infotainment has no demand for K/L one/two-wire communication, that is, it does not support ISO9141 and ISO14230 protocols, and step 807 is then executed.

At step 807, determination is made on whether a CAN_MODE_0 level is high, and if it is low, the process ends, otherwise step 708 is executed.

At step 808, determination is made on whether a CAN_MODE_1 level is high, and if it is low, the process ends, otherwise step 809 is executed.

At step 809, determination is made on whether a CAN_MODE_2 level is high, and if it is low, the process ends, otherwise step 710 is executed.

At step 810, it is determined that the in-vehicle infotainment has no demand for secondary CAN nor K/L one/two-wire communication, the cellular communication module communicates with the in-vehicle infotainment according to a standard interface, and the process ends.

The present disclosure is described below by connecting the device and system provided by the present disclosure to a specific in-vehicle infotainment.

An example is as follows: OBD interface signals of an in-vehicle infotainment are defined as in Table 3 below:

**Table 3 Definition of OBD interface of an in-vehicle infotainment**

| Pin | | Definition of interface signals | | Pin | | Definition of interface signals | |
|---|---|---|---|---|---|---|---|
| | 1 | | J2411 | | 9 | | TD |
| | 2 | | J1850+ | | 10 | | J1850- |
| | 3 | | oCAN-H | | 11 | | oCAN-L |
| | 4 | | KL31 | | 12 | | DIC |
| | 5 | | Signal GND | | 13 | | PCM |
| | 6 | | ISO15765 CAN-H | | 14 | | ISO15765 CAN-L |
| | 7 | | ISO14230 K | | 15 | | ISO14230 L |
| | 8 | | KL15 | | 16 | | KL30 |

When the in-vehicle infotainment accesses a single-chip OBD product provided in an embodiment of the present disclosure, the single chip starts to test the in-vehicle infotainment. First, MODE_0, MODE_1, MODE_2 and MODE_L are all set to 0. The single chip sends two-wire data of an ISO9141 protocol to the in-vehicle infotainment by means of pin7 and pin15, and then waits for a feedback from the in-vehicle infotainment. Since the in-vehicle infotainment does not support the ISO9141 protocol, there is no feedback from the in-vehicle infotainment. Then, the single chip sets MODE_L to be high, sends one-wire data of the ISO9141 protocol to the in-vehicle infotainment by means of pin7, and then waits for a feedback from the in-vehicle infotainment. If the in-vehicle infotainment still has no feedback, the single chip sets MODE_2 to be high and MODE_L low, and sends two-wire data of the ISO9141 protocol by means of pin9 and pin15. If the in-vehicle infotainment has no feedback, determination is made in turn. When two-wire data of an ISO14230 protocol is sent by means of pin7 and pin15, and it is found that the in-vehicle infotainment has a feedback, the single chip determines that pin7 and pin15 support the two-wire communication of the ISO14230 protocol.

Next, determination is made on the protocol supported by the secondary CAN transceiver. The single chip sets CAN_MODE_0, CAN_MODE_1 and CAN_MODE_2 to 0 first, sends one-wire CAN data of a J2411 protocol to pin1 by means of a data port, and then waits for a feedback from the in-vehicle infotainment, but the in-vehicle infotainment does not respond. CAN_MODE_1 is then set to be high, and the single chip sends two-wire CAN data of an ISO15765 protocol by means of data ports 1 and 8, and then waits for a feedback from the in-vehicle infotainment. The in-vehicle infotainment does not respond. CAN_MODE_2 is then set to be high, and the single chip sends the two-wire CAN data of the ISO15765 protocol by means of pin1 and pin9, and then waits for a feedback from the in-vehicle infotainment. The in-vehicle infotainment does not respond. CAN_MODE_0 is then set to be high, and CAN_MODE_1 and CAN_MODE_2 are set to be low. The single chip sends the two-wire CAN data of the ISO15765 protocol by means of pins 12 and 13, and then waits for a feedback from the in-vehicle infotainment. The in-vehicle infotainment does not respond. CAN_MODE_2 is still set to be high, and the single chip sends the two-wire CAN data of the ISO15765 protocol by means of pin3 and pin11, and then waits for a feedback from the in-vehicle infotainment. The in-vehicle infotainment has a feedback, and the single chip determines that the pin3 and pin11 of the in-vehicle infotainment support the two-wire CAN data transmission and reception of the ISO15765 protocol.

Thus, the single chip has completed the determination of the in-vehicle infotainment, and then the corresponding protocol is used for communication according to the corresponding pins.

In at least one embodiment of the present disclosure, the original MCU, protocol chips supported by the on-board product, control signals, etc. are integrated, and a plurality of switches are added for flexible switching, so that the aim of supporting multiple vehicle models and different protocols is achieved, and the layout area of the OBD product can be effectively reduced, thereby reducing the product size.

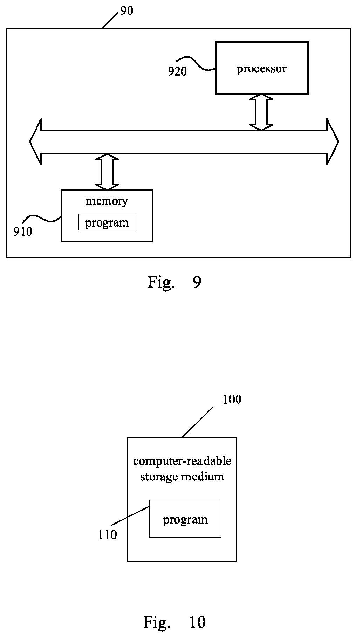

As shown in Fig. 9, an embodiment of the present disclosure provides a testing device 90, which includes a memory 910 and a processor 920. The memory 910 stores a program which, when read and executed by the processor 920, performs a testing method according to any of the embodiments.

As shown in Fig. 10, an embodiment of the present disclosure provides a computer-readable storage medium 100. The computer-readable storage medium 100 stores one or more programs 110. The one or more programs 110 can be executed by one or more processors to perform a testing method according to any of the embodiments.

In contrast with the related technologies, an embodiment of the present disclosure provides an on-board diagnostics device, including a master control module, a controller, a selection module and a plurality of protocol transceivers, the selection module being connected to some or all of the protocol transceivers, where the master control module is configured to control the controller, the selection module and the plurality of protocol transceivers, and to transmit and receive data based on a selected protocol transceiver and corresponding pins; the controller is configured to receive an external control signal, and to control the selection module according to the external control signal; the selection module is configured to switch between different protocol transceivers and pins according to the control of the controller; and the protocol transceivers are configured to transmit and receive data of supported protocols. According to the schemes provided by the embodiments of the present disclosure, different protocol transceivers are switched by means of the selection module, facilitating adaptation to different vehicle models.

It can be understood by those skilled in the art that all or some of the steps of the methods, systems and functional modules/units in the devices disclosed above can be implemented as software, firmware, hardware and appropriate combinations thereof. In the hardware implementation, the division between functional modules/units mentioned in the above description does not necessarily correspond to the division of physical components; for example, a physical component may have multiple functions, or a function or step may be performed cooperatively by several physical components. Some or all of the components may be implemented as software executed by a processor, such as a digital signal processor or a microprocessor, or as hardware, or as an integrated circuit, such as an application-specific integrated circuit. Such software can be distributed on computer-readable media, which can include computer storage media (or non-transitory media) and communication media (or transitory media). As well known to those of ordinary skill in the art, the term computer storage medium includes volatile and nonvolatile, removable and non-removable media implemented in any method or technology for storing information, such as computer-readable instructions, data structures, program modules or other data. A computer storage medium includes, but is not limited to, RAM, ROM, EEPROM, flash memory or other memory technologies, CD-ROM, digital versatile disk (DVD) or other optical disk storage, cassettes, magnetic tapes, magnetic disk storage or other magnetic storage devices, or any other medium that can be configured to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and can include any information delivery media.

## Claims

1. An on-board diagnostics system, comprising:
an on-board diagnostics device; and
an interface protection and conversion module (20), the interface protection and conversion module (20) includes pins;
the on-board diagnostics device comprising:
a master control module (11),
a controller (12),
a selection module (13), and
a plurality of protocol transceivers (14),
wherein:
the master control module (11) is configured to control the controller (12), the selection module (13) and the plurality of protocol transceivers (14), and to transmit and receive data based on a selected protocol transceiver and the pins corresponding to the selected protocol transceiver;
**characterized in that**,
the controller (12) is configured to receive an external control signal, and to control the selection module (13) according to the external control signal;
the selection module (13) is connected to some or all of the protocol transceivers (14) and configured to switch between different protocol transceivers (14) and the pins according to the control of the controller (12); and
the protocol transceivers (14) are configured to transmit and receive data of supported protocols;
wherein the on-board diagnostics device is packaged as a single chip, the single chip supports multiple CAN protocols;
the selection module (13) comprises a plurality of switches to switch the supported multiple CAN protocols.

2. The on-board diagnostics system according to claim 1, wherein the controller (12) comprises a first controller (12), which is configured to receive a zeroth control signal, a first control signal, a second control signal and a third control signal, and to control, according to the zeroth control signal, the first control signal, the second control signal and the third control signal, the selection module (13) to switch between the protocol transceivers (14) and pins which support a one-wire ISO9141 protocol, a two-wire ISO9141 protocol, a one-wire ISO14230 protocol and a two-wire ISO14230 protocol.

3. The on-board diagnostics system according to claim 1, wherein the controller comprises a second controller (12), which is configured to receive a fourth control signal, a fifth control signal and a sixth control signal, and to control, according to the fourth control signal, the fifth control signal and the sixth control signal, the selection module (13) to switch between the protocol transceivers (14) and pins which correspond to a J2411 protocol and an ISO15765 protocol of different pins.

4. The on-board diagnostics system according to claim 1, wherein the controller (12) comprises a third controller (12), which is configured to receive a seventh control signal, an eighth control signal and a ninth control signal, and to control, according to the seventh control signal, the eighth control signal and the ninth control signal, the selection module (13) to switch between a transceiver that supports Ignition-on, KL15 signals, a transceiver that supports Tachometer Display, TD signals, a transceiver that supports Assembly Line Diagnostic Link, ALDL signals, a transceiver that supports Data Communications Link, DCL signals and a transceiver that supports Chrysler Collision Detection, CCD signals, based on different pins, respectively.

5. The on-board diagnostics system according to claim 1, wherein the plurality of protocol transceivers (14) comprise at least one combination from a group consisted of the following types of transceivers: a J1850 transceiver, an ISO9141 transceiver, an ISO14230 transceiver, a J2411 transceiver, at least one secondary ISO15765 transceiver, a master ISO15765 transceiver, a transceiver that supports KL15 signals, a transceiver that supports ALDL signals, a transceiver that supports TD signals, a transceiver that supports Power-train Control Module, PCM signals, a transceiver that supports DIC signals, a transceiver that supports DCL signals, and a transceiver that supports CCD signals.

6. The on-board diagnostics system according to claim 1, further comprising:
an interface module (40), connected to an on-board diagnostics system interface of an external in-vehicle infotainment, wherein the interface protection and conversion module (20) is connected to the interface module (40) and the on-board diagnostics device, and configured to convert signals between the interface module (40) and the on-board diagnostics device for matching; and
a cellular communication module (30), connected to the on-board diagnostics device, and configured to enable communication between the on-board diagnostics device and an external network.

7. A testing method applied to an on-board diagnostics system according to any one of claims 1 to 5, comprising:
receiving a control signal and selecting a corresponding protocol transceiver and pins; and
sending protocol data corresponding to the selected protocol transceiver based on the selected pins, and determining whether an in-vehicle infotainment to be tested supports data transmission and reception based on the selected pins and the selected protocol transceiver according to whether a feedback is received from the in-vehicle infotainment to be tested.

8. The testing method of claim 7, wherein the determining whether the in-vehicle infotainment to be tested supports data transmission and reception based on the selected pins and the selected protocol transceiver according to whether a feedback is received from the in-vehicle infotainment to be tested comprises:
determining that the in-vehicle infotainment to be tested supports the data transmission and reception based on the selected pins and the selected protocol transceiver in response to a feedback being received from the in-vehicle infotainment to be tested within a preset time; and
determining that the in-vehicle infotainment to be tested does not support the data transmission and reception based on the selected pins and the selected protocol transceiver in response to no feedback being received from the in-vehicle infotainment to be tested within the preset time.

9. A computer-readable storage medium, wherein the computer-readable storage medium stores one or more programs, which are executable by one or more processors to perform a testing method of claim 7 or claim 8.

## Patentansprüche

1. On-Board-Diagnosesystem, umfassend:
ein On-Board-Diagnosegerät; und
ein Schnittstellenschutz- und -umwandlungsmodul (20), wobei das Schnittstellenschutz- und - umwandlungsmodul (20) Pins beinhaltet;
wobei das On-Board-Diagnosegerät umfasst:
ein Master-Steuermodul (11),
einen Controller (12),
ein Auswahlmodul (13), und
eine Mehrzahl von Protokoll-Transceivern (14),
wobei: das Master-Steuermodul (11) dazu konfiguriert ist, den Controller (12), das Auswahlmodul (13) und die Mehrzahl von Protokoll-Transceivern (14) zu steuern, und Daten zu übertragen und zu empfangen, basierend auf einem ausgewählten Protokoll-Transceiver und den Pins, die dem ausgewählten Protokoll-Transceiver entsprechen;
**dadurch gekennzeichnet, dass**
der Controller (12) dazu konfiguriert ist, ein externes Steuersignal zu empfangen, und das Auswahlmodul (13) zu steuern gemäß dem externen Steuersignal;
das Auswahlmodul (13) verbunden ist mit einigen oder allen der Protokoll-Transceiver (14) und konfiguriert ist zum Schalten zwischen verschiedenen Protokoll-Transceivern (14) und den Pins, gemäß der Steuerung des Controllers (12); und
die Protokoll-Transceiver (14) konfiguriert sind zum Übertragen und Empfangen von Daten von unterstützten Protokollen;
wobei das On-Board-Diagnosegerät als einzelner Chip gepackt ist, wobei der einzelne Chip mehrere CAN-Protokolle unterstützt;
das Auswahlmodul (13) eine Mehrzahl von Schaltern umfasst zum Schalten der unterstützten mehreren CAN-Protokolle.

2. On-Board-Diagnosesystem nach Anspruch 1, wobei der Controller (12) einen ersten Controller (12) umfasst, der konfiguriert ist zum Empfangen eines nullten Steuersignals, eines ersten Steuersignals, eines zweiten Steuersignals und eines dritten Steuersignals, und zum Steuern, gemäß dem nullten Steuersignal, dem ersten Steuersignal, dem zweiten Steuersignal, und dem dritten Steuersignal, des Auswahlmoduls (13), zum Schalten zwischen den Protokoll-Transceivern (14) und Pins, die ein One-Wire ISO9141 Protokoll, ein Two-Wire ISO9141 Protokoll, ein One-Wire ISO14230 Protokoll und ein Two-Wire ISO14230 Protokoll unterstützen.

3. On-Board-Diagnosesystem nach Anspruch 1, wobei der Controller einen zweiten Controller (12) umfasst, der konfiguriert ist zum Empfangen eines vierten Steuersignals, eines fünften Steuersignals, und eines sechsten Steuersignals, und zum Steuern, gemäß dem vierten Steuersignal, dem fünften Steuersignal, und dem sechsten Steuersignal, des Auswahlmoduls (13), zum Schalten zwischen den Protokoll-Transceivern (14) und Pins, die einem J2411 Protokoll und einem ISO15765 Protokoll verschiedener Pins entsprechen.

4. On-Board-Diagnosesystem nach Anspruch 1, wobei der Controller (12) einen dritten Controller (12) umfasst, der konfiguriert ist zum Empfangen eines siebten Steuersignals, eines achten Steuersignals, und eines neunten Steuersignals, und zum Steuern, gemäß dem siebten Steuersignal, dem achten Steuersignal, und dem neunten Steuersignal, des Auswahlmoduls (13), zum Schalten zwischen einem Transceiver, der Ignition-on, KL15 Signale unterstützt, einem Transceiver, der Tachometerdisplay, TD Signale unterstützt, einem Transceiver, der Assembly-Line-Diagnostic-Link, ALDL Signale unterstützt, einem Transceiver, der Data-Communications-Link, DCL Signale unterstützt, und einem Transceiver, der Chrysler-Kollisionserkennung, CCD Signale unterstützt, jeweils basierend auf verschiedenen Pins.

5. On-Board-Diagnosesystem nach Anspruch 1, wobei die Mehrzahl von Protokoll-Transceivern (14) mindestens eine Kombination aus einer Gruppe umfasst, die aus den folgenden Typen von Transceivern besteht: einem J1850-Transceiver, einem ISO9141-Transceiver, einem ISO14230-Transceiver, einem J2411-Transceiver, mindestens einem sekundären ISO15765-Transceiver, einem Master-ISO15765-Transceiver, einem Transceiver, der KL15 Signale unterstützt, einem Transceiver, der ALDL Signale unterstützt, einem Transceiver, der TD Signale unterstützt, einem Transceiver, der Power-train Control Module, PCM Signale unterstützt, einem Transceiver, der DIC Signale unterstützt, einem Transceiver, der DCL Signale unterstützt, und einem Transceiver, der CCD-Signale unterstützt.

6. On-Board-Diagnosesystem nach Anspruch 1, ferner umfassend:
ein Schnittstellenmodul (40), das mit einer On-Board-Diagnosesystemschnittstelle eines externen In-Vehicle-Infotainmentsystems verbunden ist, wobei das Schnittstellenschutz- und - umwandlungsmodul (20) mit dem Schnittstellenmodul (40) und dem On-Board-Diagnosegerät verbunden ist und dazu konfiguriert ist, Signale zwischen dem Schnittstellenmodul (40) und dem On-Board-Diagnosegerät zum Abgleich umzuwandeln; und
ein zellulares Kommunikationsmodul (30), das mit dem On-Board-Diagnosegerät verbunden ist und dazu konfiguriert ist, eine Kommunikation zwischen dem On-Board-Diagnosegerät und einem externen Netzwerk zu ermöglichen.

7. Testverfahren für ein On-Board-Diagnosesystem gemäß einem der Ansprüche 1 bis 5, umfassend:
Empfangen eines Steuersignals und Auswählen eines entsprechenden Protokoll-Transceivers und Pins; und
Senden von Protokolldaten, die dem ausgewählten Protokoll-Transceiver entsprechen, basierend auf den ausgewählten Pins, und Bestimmen, ob ein zu testendes In-Vehicle-Infotainmentsystem Datenübertragung und -empfang unterstützt, basierend auf den ausgewählten Pins und dem ausgewählten Protokoll-Transceiver, entsprechend davon, ob eine Rückmeldung von dem zu testenden In-Vehicle-Infotainmentsystem empfangen wird.

8. Testverfahren nach Anspruch 7, wobei das Bestimmen, ob ein zu testendes In-Vehicle-Infotainmentsystem Datenübertragung und Datenempfang unterstützt, basierend auf den ausgewählten Pins und dem ausgewählten Protokoll-Transceiver, entsprechend davon, ob eine Rückmeldung von dem zu testenden In-Vehicle-Infotainmentsystem empfangen wird, umfasst:
Bestimmen, dass das zu testende In-Vehicle-Infotainmentsystem die Datenübertragung und den Datenempfang unterstützt, basierend auf den ausgewählten Pins und dem ausgewählten Protokoll-Transceiver als Antwort darauf, dass eine Rückmeldung von dem zu testenden In-Vehicle-Infotainmentsystem innerhalb einer voreingestellten Zeit empfangen wird; und
Bestimmen, dass das zu testende In-Vehicle-Infotainmentsystem die Datenübertragung und den Datenempfang nicht unterstützt, basierend auf den ausgewählten Pins und dem ausgewählten Protokoll-Transceiver als Antwort darauf, dass keine Rückmeldung von dem zu testenden In-Vehicle-Infotainmentsystem innerhalb einer voreingestellten Zeit empfangen wird.

9. Computerlesbares Speichermedium, wobei das computerlesbare Speichermedium ein oder mehrere Programme speichert, die, wenn sie durch einen oder mehrere Prozessoren ausgeführt werden, ein Testverfahren nach Anspruch 7 oder 8 durchführen.

## Revendications

1. Système de diagnostic embarqué, comportant :
un dispositif de diagnostic embarqué ; et
un module de protection et de conversion d'interface (20), le module de protection et de conversion d'interface (20) inclut des broches ;
le dispositif de diagnostic embarqué comportant :
un module de commande maître (11),
une commande (12),
un module de sélection (13), et
une pluralité d'émetteurs-récepteurs de protocole (14),
où :
le module de commande maître (11) est configuré pour commander la commande (12), le module de sélection (13) et la pluralité d'émetteurs-récepteurs de protocole (14), et pour transmettre et recevoir des données sur la base d'un émetteur-récepteur de protocole sélectionné et des broches correspondant à l'émetteur-récepteur de protocole sélectionné ;
**caractérisé en ce que**
la commande (12) est configurée pour recevoir un signal de commande externe, et pour commander le module de sélection (13) en fonction du signal de commande externe ;
le module de sélection (13) est connecté à certains ou à tous les émetteurs-récepteurs de protocole (14) et configuré pour basculer entre différents émetteurs-récepteurs de protocole (14) et les broches en fonction de la commande exercée par la commande (12) ; et
les émetteurs-récepteurs de protocole (14) sont configurés pour transmettre et recevoir des données de protocoles pris en charge ;
où le dispositif de diagnostic embarqué est conditionné sous la forme d'une puce unique, la puce unique prend en charge plusieurs protocoles CAN ;
le module de sélection (13) comporte une pluralité de commutateurs pour basculer entre les multiples protocoles CAN pris en charge.

2. Système de diagnostic embarqué selon la revendication 1, où la commande (12) comporte une première commande (12), qui est configurée pour recevoir un signal de commande zéro, un premier signal de commande, un deuxième signal de commande et un troisième signal de commande, et pour commander, en fonction du signal de commande zéro, du premier signal de commande, du deuxième signal de commande et du troisième signal de commande, le module de sélection (13) pour basculer entre les émetteurs-récepteurs de protocole (14) et les broches qui prennent en charge un protocole ISO9141 à un fil, un protocole ISO9141 à deux fils, un protocole ISO14230 à un fil et un protocole ISO14230 à deux fils.

3. Système de diagnostic embarqué selon la revendication 1, où la commande comporte une deuxième commande (12), qui est configurée pour recevoir un quatrième signal de commande, un cinquième signal de commande et un sixième signal de commande, et pour commander, en fonction du quatrième signal de commande, du cinquième signal de commande et du sixième signal de commande, le module de sélection (13) pour basculer entre les émetteurs-récepteurs de protocole (14) et les broches qui correspondent à un protocole J2411 et à un protocole ISO15765 de broches différentes.

4. Système de diagnostic embarqué selon la revendication 1, où la commande (12) comporte une troisième commande (12), qui est configurée pour recevoir un septième signal de commande, un huitième signal de commande et un neuvième signal de commande, et pour commander, en fonction du septième signal de commande, du huitième signal de commande et du neuvième signal de commande, le module de sélection (13) pour basculer entre un émetteur-récepteur qui prend en charge des signaux d'allumage, KL15, un émetteur-récepteur qui prend en charge des signaux d'affichage de tachymètre, TD, un émetteur-récepteur qui prend en charge des signaux ALDL (Assembly Line Diagnostic Link), un émetteur-récepteur qui prend en charge des signaux DCL (Data Communications Link) et un émetteur-récepteur qui prend en charge des signaux CCD (Chrysler Collision Detection), sur la base de différentes broches, respectivement.

5. Système de diagnostic embarqué selon la revendication 1, où la pluralité d'émetteurs-récepteurs de protocole (14) comporte au moins une combinaison tirée d'un groupe constitué des types d'émetteurs-récepteurs suivants : un émetteur-récepteur J1850, un émetteur-récepteur ISO9141, un émetteur-récepteur ISO14230, un émetteur-récepteur J2411, au moins un émetteur-récepteur ISO15765 secondaire, un émetteur-récepteur ISO15765 maître, un émetteur-récepteur qui prend en charge des signaux KL15, un émetteur-récepteur qui prend en charge des signaux ALDL, un émetteur-récepteur qui prend en charge des signaux TD, un émetteur-récepteur qui prend en charge des signaux PCM (Power-train Control Module), un émetteur-récepteur qui prend en charge des signaux DIC, un émetteur-récepteur qui prend en charge des signaux DCL et un émetteur-récepteur qui prend en charge des signaux CCD.

6. Système de diagnostic embarqué selon la revendication 1, comportant en outre :
un module d'interface (40), connecté à une interface de système de diagnostic embarqué d'un info-divertissement embarqué externe, où le module de protection et de conversion d'interface (20) est connecté au module d'interface (40) et au dispositif de diagnostic embarqué, et configuré pour convertir des signaux entre le module d'interface (40) et le dispositif de diagnostic embarqué pour l'appariement ; et
un module de communication cellulaire (30), connecté au dispositif de diagnostic embarqué, et configuré pour permettre la communication entre le dispositif de diagnostic embarqué et un réseau externe.

7. Procédé de test appliqué à un système de diagnostic embarqué selon l'une quelconque des revendications 1 à 5, comportant :
la réception d'un signal de commande et la sélection d'un émetteur-récepteur de protocole et de broches correspondants ; et
l'envoi de données de protocole correspondant à l'émetteur-récepteur de protocole sélectionné sur la base des broches sélectionnées, et le fait de déterminer si un info-divertissement embarqué à tester prend en charge la transmission et la réception de données sur la base des broches sélectionnées et de l'émetteur-récepteur de protocole sélectionné en fonction de la réception on non d'un retour de la part de l'info-divertissement embarqué à tester.

8. Procédé de test de la revendication 7, où le fait de déterminer si l'info-divertissement embarqué à tester prend en charge la transmission et la réception de données sur la base des broches sélectionnées et de l'émetteur-récepteur de protocole sélectionné en fonction de la réception ou non d'un retour en provenance de l'info-divertissement embarqué à tester comporte :
la détermination que l'info-divertissement embarqué à tester prend en charge la transmission et la réception de données sur la base des broches sélectionnées et de l'émetteur-récepteur de protocole sélectionné en réponse à un retour reçu de l'info-divertissement embarqué à tester dans un délai prédéfini ; et
la détermination que l'info-divertissement embarqué à tester ne prend pas en charge la transmission et la réception de données sur la base des broches sélectionnées et de l'émetteur-récepteur de protocole sélectionné en réponse à l'absence de réception d'un retour de l'info-divertissement embarqué à tester dans le délai prédéfini.

9. Support de stockage lisible par ordinateur, où le support de stockage lisible par ordinateur stocke un ou plusieurs programmes, qui sont exécutables par un ou plusieurs processeurs pour exécuter un procédé de test de la revendication 7 ou de la revendication 8.
